(19) Europäisches Patentamt
European Patent Office
Office européen des brevets

(11) **EP 3 466 652 B1**

(12) **EUROPEAN PATENT SPECIFICATION**

(45) Date of publication and mention
of the grant of the patent:
**31.03.2021  Bulletin 2021/13**

(51) Int Cl.:
**B29C 65/08** *(2006.01)*          *B29K 101/12* *(2006.01)*

(21) Application number: **17810375.0**

(22) Date of filing: **07.06.2017**

(86) International application number:
**PCT/JP2017/021212**

(87) International publication number:
**WO 2017/213201 (14.12.2017 Gazette 2017/50)**

(54) **METHOD FOR PRODUCING BONDED BODY**

VERFAHREN ZUR HERSTELLUNG EINES VERBUNDENEN KÖRPERS

PROCÉDÉ DE PRODUCTION D'UN CORPS COLLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2016   JP 2016113592**

(43) Date of publication of application:
**10.04.2019   Bulletin 2019/15**

(73) Proprietor: **Teijin Limited
Osaka-shi, Osaka 530-0005 (JP)**

(72) Inventors:
• **SHI, Jianwei
  Osaka 530-0005 (JP)**
• **OHKI, Takeru
  Osaka 530-0005 (JP)**

(74) Representative: **Cockerton, Bruce Roger
Carpmaels & Ransford LLP
One Southampton Row
London WC1B 5HA (GB)**

(56) References cited:
**JP-A- H0 953 057          JP-A- S52 150 447
JP-A- 2001 334 576      JP-A- 2003 127 264
JP-A- 2004 107 605      JP-A- 2012 126 082
US-A1- 2015 041 070**

• **FERNANDEZ VILLEGAS I ET AL: "Process and
performance evaluation of ultrasonic, induction
and resistance welding of advanced
thermoplastic composites", JOURNAL OF
THERMOPLASTIC COMPOSITE MATERIALS,
SAGE PUBLICATIONS, US, vol. 26, no. 8, 1
September 2013 (2013-09-01), pages 1007-1024,
XP002767725, ISSN: 0892-7057, DOI:
10.1177/0892705712456031**

## Description

Technical Field

The present invention relates to a method for producing a joined body containing a thermoplastic resin. More particularly, the present invention relates to a method for producing a joined body excellent in productivity and joint strength, and can be suitably used as methods for producing structural members represented by automobiles.

Background Art

Shaped products containing thermoplastic resins are widely used in various fields, and in recent years, particularly, in a machinery field, so-called fiber-reinforced thermoplastic resin shaped products (hereinafter, also referred to as fiber-reinforced thermoplastics) containing thermoplastic resins serving as matrixes and reinforcing fibers such as carbon fibers have attracted attention. For example, methods of forming closed cross-sectional structures to improve stiffness in joining fiber-reinforced thermoplastics, required to produce parts and structural members for automobiles, have been proposed. Mechanical joining using bolts, nuts, rivets, and the like, chemical joining using adhesives, and thermal joining using hot plate welding, IR welding, vibration welding, ultrasonic welding, and the like to join fiber-reinforced thermoplastics containing thermoplastic resins as matrixes have been proposed. Of them, ultrasonic welding is widely used in various industrial fields since it does not need any other materials and its cycle time is short and it has other advantages.

Ultrasonic welding is a method of welding a joining object body to another joining object body that is in contact therewith, in which a resonator called a welding horn is pressed against the joining object bodies while high-frequency mechanical vibration is given from the resonator, and the mechanical vibration transferred to the joining object bodies is converted into heat energy to heat and melt a part of the joining object bodies.

Of ultrasonic welding, a method of performing welding more efficiently by forming protrusions called energy directors on the surfaces of joining object bodies, integrally with the joining object bodies, to obtain stable and high joint strength and intensively vibrating and melting the energy directors when applying an ultrasonic wave is known (Patent Literature 1).

Patent Literature 2 discloses a method of joining two fiber-reinforced thermoplastic resins by joining a thermoplastic resin material to a joining surface of at least one fiber-reinforced thermoplastic resin in advance to join the two fiber-reinforced thermoplastic resins.

Also, Non-Patent Literature 1 discloses a method of disposing a monofilament fabric mesh or film composed of nylon 6 or nylon 66 on a joining surface of a molded plate composed of carbon-fiber-reinforced nylon 6, and performing welding by applying an ultrasonic wave to the molded plate.

Patent Literature 3 relates to systems and methods for improved ultrasonic welding using at least one multi-height energy-directing device positioned between workpieces during application of high-frequency ultrasonic vibrations from a servo horn, for instance. In one embodiment one or both of the workpieces includes some sort of plastic. In one embodiment, the material includes a thermo-plastic. The energy director can include any material described within Patent Literature 3, including in connection with the workpieces. In one embodiment, the energy director is generally annular-e.g., has a generally annular, or ring-like, plan-view (e.g., top) profile. The energy director includes a plurality of energy-director (ED) elements. The elements may be referred to by other names such as a height-control ED element, protrusion, or ridge, or an elevation-control element, protrusion, or ridge. In one embodiment, each primary element of the elements has a height of between about 0.5 mm and about 6.0 mm, and each secondary element has a height between about 0.4 mm and about 4.0 mm. A method for locating the energy director and welding workpieces together by applying welding energy to a proximate workpiece at the identified location so that it channels through, and melts, the energy director as desired is described.

Non-Patent Literature 2 presents a comparative evaluation of ultrasonic, induction and resistance welding of individual carbon fibre-reinforced polyphenylene sulphide (PPS) thermoplastic composite samples that comprises an analysis of the static and dynamic mechanical behaviour of the joints as well as of the main process variables

Citation List

Patent Literature

Patent Literature 1: WO2015/163218
Patent Literature 2: Japanese Patent No. 5787150

Patent Literature 3: US2015/041070 A1

Non-Patent Literature

Non-Patent Literature 1: Kazuho Takeuchi, Akio Ohtani, "EFFECT OF WELDING CONDITION OF ULTRASONIC WELDING ON JOINT PROPERTIES OF C-FRTP", 14TH JAPAN INTERNATIONAL SAMPE SYMPOSIUM AND EXHIBITION, Conference at Kanazawa in 8th Dec. 2015
Non-Patent Literature 2 FERNANDEZ VILLEGAS I ET AL, "Process and performance evaluation of ultrasonic, induction and resistance welding of advanced thermoplastic composites", JOURNAL OF THERMOPLASTIC COMPOSITE MATERIALS, SAGE PUBLICATIONS, US, (20130901), vol. 26, no. 8, doi:10.1177/0892705712456031, ISSN 0892-7057, pages 1007 - 1024, XP002767725

Summary of the Invention

Problems to be Solved by the Invention

However, with respect to the joining method using energy directors formed integrally with joining object bodies as disclosed in Patent Literature 1, there are the following problems.

(1) In order to form energy directors on surfaces of joining object bodies, it is required to produce molds subjected to fine processing. Therefore, there is a problem that the cost increases.
(2) In the case of forming energy directors, particularly, on end parts of large-sized members, during shaping, a pressure distribution is likely to occur. Therefore, there is a problem that their shape and size are likely to become unstable and are likely to vary.
(3) Sometimes, particularly, large-sized members warp and deform due to various factors, whereby their joining surfaces having energy directors cannot be brought into contact with other joining object members. Therefore, sometimes, joint strength is insufficient, or joining is impossible.
(4) In the case where parts of a joined part obtained by welding using energy directors interposed therebetween separate from each other, it is impossible to newly provide energy directors on the separated surfaces. Therefore, a repair by reformation of energy directors in molding is difficult.

Also, in the joining method disclosed in Patent Literature 2, in joining two fiber-reinforced thermoplastic resins, two processes, i.e. a process of joining a thermoplastic resin material layer to joining surfaces and a subsequent process of joining the two fiber-reinforced thermoplastic resins are required. Therefore, the processing becomes complicated, and more time and cost are required. Also, the surface of the thermoplastic resin material disposed between two joining surfaces does not have protrusions to function as energy directors, and thus stable and high joint strength is unlikely to be obtained.
Further, in the method of Non-Patent Literature 1, a fabric mesh formed of thermoplastic resin monofilaments is inserted between bodies to be joined such that it can be used as an energy director. However, in the case of some fabrics, due to their weaving structures, crimp parts in which monofilaments cross each other exist. In the crimp parts, since monofilaments are likely to move relatively with each other, there is a problem that a loss in vibration energy applied occurs, thereby resulting in a decrease in joint strength. Also, in the case of fabric meshes, it is possible to produce relatively thin fabric meshes, but it is difficult to obtain thick fabric meshes.
Therefore, an object of the present invention is to provide a method for producing a joined body, which is low in cost, and is excellent in productivity, and can join joining object bodies stably with high joint strength even in joining all parts of joining object bodies or joining warped joining object bodies, and makes it possible to easily perform a repair even though joined surfaces separate from each other locally.

Means for Solving the Problems

The inventors of this application found that it is possible to solve the above-mentioned problems by the following means, as the result of earnest studies, and reached the present invention, which is a method for producing a joined body according to claim 1.

<1> A method for producing a joined body, the method including: disposing a joining member between a member A containing a thermoplastic resin and a member B containing a thermoplastic resin, the joining member having a sheet part containing a thermoplastic resin and a plurality of protrusion parts on at least one surface of the sheet part integrally formed with the sheet part, the protrusion parts containing a thermoplastic resin; and melting at least a part of the joining member to join the member A and the member B to obtain a joined body thereof; wherein the maximum height of the protrusion parts is in a range from 100 to 500 $\mu$m; and wherein the ratio of the distance between joining surfaces of the member A and the member B in the joined body to the height of the joining member before joining which is defined by the following Formula S2 is 95% or less; Formula S2: Ratio of Distance between Joining Surfaces of Member A and Member B in Joined Body to Height of Joining Member before Joining = [(Distance between Joining Surfaces of Member A And Member B in Joined Body)/(Height of Joining Member before Joining)] $\times$ 100 (%).

<2> The method for producing a joined body according to <1>, wherein the thickness of the sheet part is in a range from 100 $\mu$m to 5000 $\mu$m.

<3> The method for producing a joined body according to <1> or <2>, wherein the maximum height of the protrusion parts is in a range from 100 $\mu$m to 300 $\mu$m.

<4> The method for producing a joined body according to any one of < 1 > to <3>, wherein, with respect to at least one surface of the joining member, the ratio of the sum of the projected areas of the protrusion parts to the area of the sheet part which is defined by the following formula (S1) is in a range from 25% to 95%.

Formula (S1)

(Ratio of Sum of Projected Areas of Protrusion Parts to Area of Sheet Part) = [(Sum of Projected Areas of Protrusion Parts on One Surface of Sheet Part)/(Area of One Surface of Sheet Part)] $\times$ 100 (%)

<5> The method for producing a joined body according to any one of <1> to <4>, wherein both surfaces of the sheet part of the joining member have the protrusion parts.

<6> The method for producing a joined body according to any one of <1> to <5>, wherein a method of melting at least one part of the joining member is a method of applying vibration energy.

<7> The method for producing a joined body according to any one of <1> to <6>, wherein at least one of the member A, the member B, and the joining member contains reinforcing fibers.

<8> The method for producing a joined body according to any one of <1> to <7>, wherein a thickness of the sheet part is 300 $\mu$m or greater.

<9> The method for producing a joined body according to <6>, wherein the protrusion parts are starting point of the melting at least one part of the joining member.

<10> The method for producing a joined body according to any one of <1> to <9>, wherein the joining member is disposed in a gap between the member A and the member B, the gap being caused by warpages of the member A and the member B.

Advantageous Effects of Invention

According to the present invention, it is possible to provide a method for producing a joined body, which is low in cost, and is excellent in productivity, and can join joining object bodies stably with high joint strength even in joining all parts of joining object bodies or joining warped joining object bodies, and makes it possible to easily perform a repair even though joined surfaces separate from each other locally.

Also, according to the present invention, it is possible to provide a method for producing a joined body, excellent in joint strength and the degree of freedom in design and applicable for mass production.

Brief Description of Drawings

[Fig. 1] Fig. 1 is a schematic cross-sectional diagram illustrating an example of a joining member.
[Fig. 2] Fig. 2 is a schematic cross-sectional diagram illustrating an example of a joining member.
[Fig. 3] Fig. 3 is a schematic diagram illustrating an example of a method for producing a joined body.
[Fig. 4] Fig. 4 is a schematic cross-sectional diagram for explaining the thickness of a sheet part and the maximum height of protrusion parts in an example of a joining member.

Mode for Carrying Out the Invention

Hereinafter, embodiments of the present invention will be described sequentially.

A method for producing a joined body according to the present invention is a method for producing a joined body, the method including disposing a joining member between a member A containing a thermoplastic resin and a member B containing a thermoplastic resin, the joining member including a sheet part containing a thermoplastic resin and a plurality of protrusion parts integrally formed with the sheet part on at least one surface of the sheet part, the protrusion parts containing a thermoplastic resin; and melting at least a part of the joining member to join the member A and the member B to obtain a joined body thereof; wherein the maximum height (h) of the protrusion parts is in a range from 100 to 500 $\mu$m; and wherein the ratio of the distance between joining surfaces of the member A and the member B in the joined body to the height of the joining member before joining which is defined by the following Formula S2 is 95% or less; Formula S2: Ratio of Distance between Joining Surfaces of Member A and Member B in Joined Body to Height of Joining Member before Joining = [(Distance between Joining Surfaces of Member A And Member B in Joined Body)/(Height of Joining Member before Joining)] $\times$ 100 (%).

[Joining member]

A joining member which is used in the method for producing a joined body according to the present invention is a joining member having a sheet part containing a thermoplastic resin and a plurality of protrusion parts formed on at least one surface of the sheet part integrally with the sheet part and containing a thermoplastic resin.

(Sheet Part)

A sheet part of a joining member is a part containing at least a thermoplastic resin.

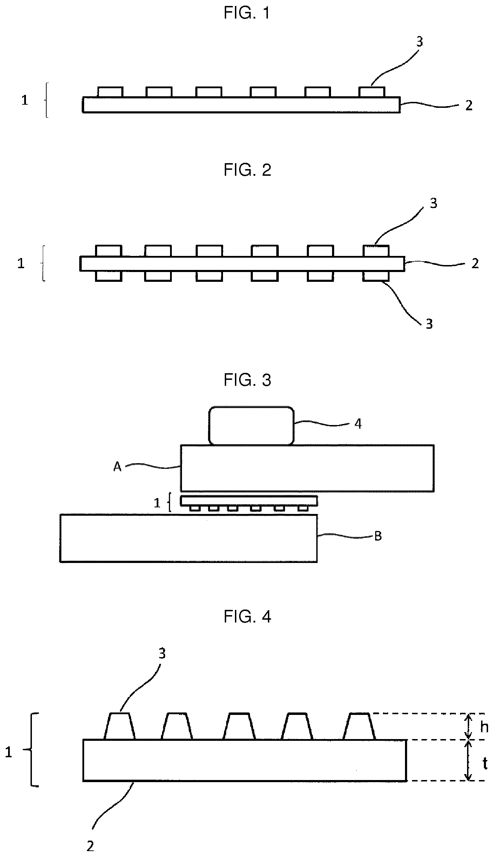

Although the thickness of a sheet part is not particularly limited, in terms of handling easiness of the joining member and a practical fitting range in assembling bodies to be joined, it is preferable that the thickness of the sheet part be in a range from 5 $\mu$m to 5000 $\mu$m, and it is more preferable that the thickness of the sheet part be in a range from 40 $\mu$m to 4000 $\mu$m, and it is further preferable that the thickness of the sheet part be in a range from 100 $\mu$m to 3000 $\mu$m. For example, in a joining member 1 shown in FIG. 4, the thickness of a sheet part 2 is represented by t.

In the case where a joining object body (a member A and a member B) is warped, the thickness of a sheet part of a joining member of the present invention can be adjusted to fill the gap between the member A and the member B caused by the warpage. Therefore, even in the case where welding is naturally difficult like the case where there is a gap, it is possible to easily obtain a joined body with high joint strength.

The size and shape of sheet part of the joining member are not particularly limited.

As the joining member of the present invention, joining members having arbitrary sizes and shapes according to the shapes and sizes of parts to be joined can be used. Therefore, joined body has very high joint strength and a very high degree of freedom in design. Also, after joining, even though joined surfaces separate from each other, it is possible to easily repair by cutting a necessary joining member into a size according to the size of the separated parts and disposing the joining member between the separated parts.

<Thermoplastic Resins>

The types of thermoplastic resins which can be contained in sheet parts are not particularly limited, and as examples thereof, vinyl-chloride-based resins, vinylidene-chloride-based resins, vinyl-acetate-based resins, polyvinyl-alcohol-based resins, polystyrene-based resins, acrylonitrile-styrene-based resins (AS resins), acrylonitrile-butadiene-styrene-based resins (ABS resins), acrylate-based resins, methacryl-based resins, polyethylene-based resins, polypropylene-based resins, various thermoplastic-polyamide-based resins, polyacetal-based resins, polycarbonate-based resins, polyethylene-terephthalate-based resins, polyethylenenaphthalate-based resins, polybutylene-naphthalate-based resins, polybutylene-terephthalate-based resins, polyarylate-based resins, polyphenylene-ether-based resins, polyphenylenesulfide-based resins, polysulfone-based resins, polyethersulfone-based resins, polyetheretherketone-based resins, polylactate-based resins, and so on can be taken. Above all, nylon (thermoplastic polyamide), polycarbonate, polyoxymethylene, polyphenylene sulfide, polyphenylene ether, denatured-polyphenyleneether, polyethylene terephthalate, polybutylene terephthalate, polyethylene naphthalate, polyethylene, polypropylene, polystyrene, polymethyl methacrylate, AS resins, ABS resins, and the like can be preferably taken.

In view of cost and physical properties, at least one selected from a group consisting of nylon, polypropylene, polycarbonate, and polyphenylene sulfide is more preferable. Also, as nylon (hereinafter, also referred to simply as PA), at least one selected from a group consisting of PA6 (also referred to as polycaproamide, polycaprolactam, or poly-$\epsilon$-caprolactam), PA26 (polyethylene adipamide), PA46 (polytetramethylene adipamide), PA66 (polyhexamethylene adipamide), PA69 (polyhexamethylene azelamide), PA610 (polyhexamethylene sebacamide), PA611 (polyhexamethylene undecamide), PA612 (polyhexamethylene dodecamide), PA11 (polyundecanamide), PA12 (polydodecanamide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), and polyamide MXD6 (polymethaxylylene adipamide) is preferable. These thermoplastic resins may include additives such as stabilizers, flame retardants, pigments, and fillers, if necessary. These thermoplastic resins may be used alone or in combination of two or more thereof.

A thermoplastic resin which is contained in a sheet part and a thermoplastic resin which is contained in at least one of a member A and a member B may be the same as each other or may be different from each other. However, in terms of restrictions in a thermal welding process and guarantee of joint strength according to the heat histories of resins, it is preferable that the difference between the melting point of a thermoplastic resin which is contained in a sheet part and the melting point of a thermoplastic resin which is contained in at least one of a member A and a member B is 50°C or less, and it is more preferable that the difference is 20°C or less.

Sheet parts may contain components other than thermoplastic resins.

Components other than thermoplastic resins which sheet parts may contain are not particularly limited, and as examples thereof, reinforcing fibers, fillers, flame retardants, anti-UV agents, stabilizers, releasing agents, pigments, softeners, plasticizers, surfactants, antioxidants, and so on can be taken.

In the present invention, it is possible to use additives which the member A and the member B do not contain in forming sheet parts or/and protrusion parts of the joining member, thereby capable of imparting various functions.

As examples of reinforcing fibers, carbon fibers, glass fibers, aramid fibers, and so on can be taken; however, in terms of dynamic properties and reduction in weight, carbon fibers are preferable.

<Carbon Fibers>

Carbon fibers are not particularly limited, and as specific examples thereof, PAN-based carbon fibers and pitch-based carbon fibers can be taken. Above all, since PAN-based carbon fibers are light, they can be suitably used for reduction in the weight of joined body, and so on. Also, one kind of carbon fibers may be used, or two or more kinds of carbon fibers may be used together. Morphologies of carbon fibers are not particularly limited, and continuous fibers or discontinuous fibers may be used.

In general, it is suitable that the average fiber diameters of continuous fibers are in a range from 5 $\mu$m to 20 $\mu$m.

Also, in the case of discontinuous carbon fibers, carbon fibers in a thermoplastic resin may be in any one of a state of being oriented in a specific direction, a state of being two-dimensionally and randomly dispersed in the plane, and a state of being three-dimensionally and randomly dispersed. As discontinuous carbon fibers, carbon fibers having an average fiber diameter in a range from 5 $\mu$m to 20 $\mu$m and having an average fiber length in a range from 0.05 mm to 20 mm, more preferably, in a range from 0.1 mm to 10 mm may be preferably used. If the average fiber length is 0.05 mm or more, the reinforcing effect is excellent, and if the average fiber length is 20 mm or less, it is very easy to form sheet parts and protrusion parts.

Preferably, discontinuous carbon fibers contain a carbon fiber bundle (A) consisting of fibers, the number of which is equal to or larger than a critical single fiber number which is defined by the following formula (a), and a carbon fiber bundle (B1) consisting of fibers, the number of which is smaller than the critical single fiber number, mixed therein with or without carbon single fibers (B2), and the ratio of the carbon fiber bundle (A) to the total amount of carbon fibers in a range from 20 Vol% to 99 Vol%, more preferably, in a range from 30 Vol% to 90 Vol%, and the average number of fibers (N) in the carbon fiber bundle (A) satisfies the following formula (b).

$$\text{Critical Single Fiber Number} = 600/D \qquad (a)$$

$$0.6 \times 10^4/D^2 < N < 6 \times 10^5/D^2 \qquad (b)$$

(D represents the average fiber diameter ($\mu$m) of carbon fibers.)

More preferably, the range of the average number of fibers (N) satisfies: $06 \times 10^4/D^2 < N < 1 \times 10^5/D^2$.

As carbon fibers, a combination of continuous fibers and discontinuous fibers may also be used.

Sheet parts can be produced by, for example, injection molding or extrusion molding, or can be produced

6

together with protrusion parts by press molding.

(Protrusion Parts)

Protrusion parts of a joining member contain at least a thermoplastic resin, and are integrally formed with the sheet part on at least one surface of the sheet part.

In the present invention, in the case of performing joining by a method of applying vibration energy like ultrasonic welding, it is preferable that protrusion parts of the joining member function as energy directors. In this case, energy directors have a form of protrusions to be brought into contact with a joining surface in order to implement a uniform molten state and efficient welding. In joining smooth surfaces, if vibration energy such as an ultrasonic wave is applied, due to surface roughness and the like, melting positions of resins become uneven, and thus it is impossible to obtain uniform and stable joint strength. Also, in the case where rise in the heat radiation temperature of joining surfaces is slow and the process requires too much time, the efficiency is bad, and deterioration of the resins is caused. Meanwhile, in the case of joining surfaces having energy directors formed thereon, since melting positions of resins always become the vertexes of protrusion shapes and are fixed, applied vibration energy intensively acts on those parts, whereby uniform molten states are obtained. Therefore, it becomes possible to obtain stable welding strength. Also, since generation of heat to the resin melting temperatures of joining surfaces is achieved in a very short time, it becomes possible to perform welding efficiently. Therefore, it is possible to suppress deterioration of resins.

In the present invention, a joining member has a plurality of protrusion parts on at least one surface of a sheet part, and may have protrusion parts only on one surface of the sheet part (see Fig. 1) or may have protrusion parts on both surfaces of the sheet part (see Fig. 2). Particularly, in the case of performing welding using a joining member having a thick sheet part to fill a gap between the joining surfaces of the member A and the member B caused by warpage of the member A or the member B, if protrusion parts are formed on both surfaces of the thick sheet part, more stable and higher joint strength is obtained. In such cases, thick sheet parts depend on welding conditions including the vibration application time of welding, and generally mean sheet parts having thicknesses of 300 $\mu$m or greater.

The shapes of protrusion parts are not particularly limited, and as examples thereof, columnar shapes extending along the normal direction of a surface of the sheet part (for example, circular column shapes or prismatic column shapes), conical or pyramidal shapes (for example, cone shapes or pyramid shapes), truncated cone shapes, truncated pyramid shapes, or rod shapes extending along a surface of the sheet part (The shapes may be linear or may be curved. The shapes of cross sections in the direction normal to the surface of the sheet part are not particularly limited.), plate shapes, shapes having curved surfaces or spherical surfaces (spherical cap shapes), and so on can be taken. Also, all protrusion parts may have the same shape, or a joining member may have protrusion parts having different shapes.

With respect to the height of protrusion parts, in terms of stability in the dimensions of joining object parts before and after welding, the maximum height of protrusion parts from a surface of a sheet part is in a range from 100 $\mu$m to 500 $\mu$m, and it is more preferable that the maximum height is in a range from 100 $\mu$m to 300 $\mu$m. If the maximum height of protrusion parts is equal to or larger than 50 $\mu$m, when melting the joining member, protrusion parts are likely to be starting points of melting, and thus the joining member are welded stably and with high joint strength. Meanwhile, if the maximum height of protrusion parts is equal to or smaller than 500 $\mu$m, it is possible to decrease the welding time required to completely melt the protrusion parts. Therefore, the productivity is high, and it is possible to suppress deterioration of thermoplastic resins constituting the protrusion parts. For example, in a joining member 1 shown in FIG. 4, the maximum height of protrusion parts 3 is represented by h.

Also, in the case of using a method of applying vibration energy, particularly, a vibration welding method, as a method of melting a joining member, it is possible to further increase the maximum height of protrusion parts. In this case, for example, it is possible to set the maximum height of the protrusion parts in a range from 50 $\mu$m to 5000 $\mu$m. However, in the method of the present invention, the maximum height of protrusion parts from a surface of a sheet part is in a range from 100 $\mu$m to 500 $\mu$m.

In the present invention, the number of protrusion parts is not particularly limited, and the number of protrusion parts which is preferable can be suitably designed such that stable and high joint strength is obtained in a selected combination of a protrusion part height and the projected areas of protrusion parts.

In the present invention, the ratio of protrusion parts which are formed on a sheet part needs to be suitably adjusted according to the purpose and the like of a joining member of the present invention, and is not particularly limited, and it is preferable that, with respect to at least one surface of a joining member, the ratio of the sum of the projected areas of protrusion parts to the area of a sheet part, which is defined by the following formula (S1), is in a range from 25% to 95%, and it is more preferable that the ratio is in a range from 30% to 85%. If the above-mentioned ratio is in the above-mentioned range, when melting the joining member, the protrusion parts become starting points of melting, and thus it is possible to obtain sufficient joint strength.

Formula (S1)

(Ratio of Sum of Projected Areas of Protrusion Parts to Area of Sheet Part) = [(Ratio of Sum of Projected Areas of Protrusion Parts on One Surface of Sheet Part)/(Area of One Surface of Sheet Part)] × 100 (%)

In a joining member having protrusion parts formed on only one surface of a sheet part, the "Area of Sheet Part" is the area of the surface having the protrusion parts. In the case of a joining member having protrusion parts formed on both surfaces of a sheet part, the ratio of the projected areas of protrusion parts is determined for each surface.

The "Projected Areas of Protrusion Parts" are the areas of projection diagrams obtained by projecting the protrusion parts from the direction of the normal line to the surface of the sheet part on which the protrusions are formed, and the "Sum of Projected Areas of Protrusion Parts" is the sum of the areas of the projection diagrams of all of the protrusion parts on one surface of the sheet part.

Specific examples and a preferred range of the kinds of thermoplastic resins which can be contained in protrusion parts are the same as the above-mentioned specific examples and preferred range of the kinds of thermoplastic resins which can be contained in sheet parts.

A thermoplastic resin which is contained in protrusion parts and a thermoplastic resin which is contained in sheet parts may be the same as each other or may be different from each other; however, in terms of restrictions in a thermal welding process and guarantee of joint strength according to the heat histories of resins, it is preferable that the difference between the melting point of the thermoplastic resin which is contained in protrusion parts and the melting point of the thermoplastic resin which is contained in sheet parts is 50°C or less, and it is more preferable that the difference is 20°C or less. Also, a thermoplastic resin which is contained in protrusion parts and a thermoplastic resin which is contained in the member A or/and the member B may be the same as each other or may be different from each other; however, in terms of restrictions in a thermal welding process and guarantee of joint strength according to the heat histories of resins, it is preferable that the difference between the melting point of a thermoplastic resin which is contained in protrusion parts and the melting point of a thermoplastic resin which is contained in the member A or/and the member B be 50°C or less, and it is more preferable that the difference be 20°C or less.

Protrusion parts may contain components other than thermoplastic resins, and the components other than thermoplastic resins are the same as the above-mentioned components other than thermoplastic resins which sheet parts may contain.

(Method of preparing Joining member)

The method of preparing a joining member is not particularly limited. For example, it is possible to prepare the joining member by performing press molding or injection molding of thermoplastic resins. Also, it is possible to prepare the joining member by molding a thermoplastic resin into a sheet shape and then forming protrusion parts by embossing or the like. Especially, the method of preparing the joining member by embossing is preferable since continuous production of the joining member is easy and it is possible to decease the production cost.

[Member A]

The member A contains at least thermoplastic resins.

Specific examples and a preferred range of the kinds of thermoplastic resins which can be contained in the member A are the same as the above-mentioned specific examples and preferred range of the kinds of thermoplastic resins which can be contained in sheet parts.

The member A may contain components other than thermoplastic resins, and the components other than thermoplastic resins are the same as the above-mentioned components other than thermoplastic resins which sheet parts may contain.

It is preferable that the member A contains reinforcing fibers, and it is more preferable that the member A contains carbon fibers.

With respect to carbon fibers, besides the items described with respect to carbon fibers which sheet parts may contain, the following items are preferable.

In the case where carbon fibers are continuous fibers, the member A may have a form of knitted fabric or woven fabric, or may have a form of a sheet formed by arranging carbon fibers in one direction, i.e. a so-called UD sheet. As UD sheets, UD sheets formed by stacking a plurality of layers such that the fiber arrangement directions in the individual layers cross each other alternately (for example, by stacking the layers such that the fiber arrangement directions in the individual layers cross each other at right angles alternately) can be used.

A member A may be a combination of one member containing continuous fibers and another member containing discontinuous fibers obtained by stacking or the like.

In the case where carbon fibers are discontinuous and are two-dimensionally and randomly dispersed, carbon fibers may have a form of a member obtained by press molding, or carbon fibers may have a form of a sheet formed by wet papermaking, or may have a form of a sheet or a mat (hereinafter, also referred to collectively as a mat) formed by arranging discontinuous carbon fibers such that the carbon fibers are dispersed and overlap. In this case, the average fiber diameter is in a range from 5 $\mu$m to 20 $\mu$m, and the average fiber length is preferably in a range from 1 mm to 100 mm, and is more preferably in a range from 3 mm to 100 mm, and is further preferably in a range from 10 mm to 100 mm, and is still further preferably in a range from 12 mm to 50 mm. In the latter mat, the average fiber length of carbon fibers which are contained in the mat is important, and in the case where the average fiber length is longer than 1 mm, the mat can easily fulfill a role as carbon fibers, and sufficient strength is likely to be obtained. In contrast, in the case where the average fiber length is shorter than 100 mm, the flowability during molding is good, and thus a desired shaped product can be easily obtained.

The member A may be a three-dimensional isotropic carbon fiber mat formed by, for example, entangling carbon fibers into the shape of cotton such that the long axis directions of carbon fibers are disposed randomly in the directions of X, Y, and Z, and in the case of using press molding to be described below, mats in which carbon fibers have average fiber lengths in an above-mentioned range and are oriented substantially two-dimensionally and randomly (hereinafter, referred to as random mats) are preferable.

Here, being oriented substantially two-dimensionally and randomly indicates a state in which, carbon fibers are not oriented in specific directions such as one direction in an in-plane direction of fiber-reinforced thermoplastic but are oriented randomly, and are disposed in the plane without generally expressing specific directionality.

In a random mat, all or most of carbon fibers may be in a state of being opened in a single fiber form, and particularly, an isotropic random mat in which fiber bundles which are bundles of a certain number or more of single fibers and fiber bundles which are in a single fiber form or are close to the single fiber form are mixed at a predetermined ratio is preferable. Such isotropic random mats and producing methods thereof are disclosed in detail in the specifications of WO2012/105080 and Japanese Patent Application Laid-Open No. 2013-49208.

Such a preferred random mat is an isotropic random mat containing carbon fiber bundles (A) consisting of fibers, the number of which is equal to or larger than a critical single fiber number which is defined by the following formula (a), and carbon fiber bundles (B1) consisting of fibers, the number of which is smaller than the critical single fiber number, mixed therein with or without carbon single fibers (B2), and the ratio of the total amount of fibers of the carbon fiber bundle (A) in the isotropic random mat is in a range from 20 Vol% to 99 Vol%, more preferably, in a range from 30 Vol% to 90 Vol%, and the average number of fibers (N) in the carbon fiber bundle (A) satisfies the following formula (b).

$$\text{Critical Single Fiber Number} = 600/D \qquad \text{(a)}$$

$$0.6{\times}10^4/D^2 < N < 6{\times}10^5/D^2 \qquad \text{(b)}$$

(D represents the average fiber diameter ($\mu$m) of carbon fibers.)

More preferably, the range of the average number of fibers (N) satisfies: $0.6{\times}10^4/D^2 < N < 1{\times}10^5/D^2$.

The average fiber diameter of carbon fibers is in a range from 5 $\mu$m to 20 $\mu$m, more preferably, in a range from 5 $\mu$m to 12 $\mu$m.

In the member A, the weight per unit of carbon fibers is in a range from 25 g/m$^2$ to 10000 g/m$^2$, and the ratio of the total amount of carbon fibers in the carbon fiber bundle (A) consisting of fibers, the number of which is equal to or larger than the critical single fiber number which is defined by the above-mentioned formula (a), is in the above-mentioned range, and the average number of fibers (N) in the carbon fiber bundle (A) satisfies the above-mentioned formula (b). Therefore, the balance between moldability and mechanical strength of the member A serving as a composite material is good. It is preferable that the weight per unit of carbon fibers be in a range from 25 g/m$^2$ to 4500 g/m$^2$.

It is preferable that the content of a thermoplastic resin in a member A be in a range from 3 parts by weight to 1000 parts by weight with respect to 100 parts by weight of carbon fibers.

In the member A, volume fraction of carbon fibers (hereinafter, also referred to simply as "Vf') which are defined by the following formula (1) are not particularly limited; however, it is preferable that volume fraction of carbon fibers (Vf) is in a range from 10 Vol% to 70 Vol%.

$$Vf = 100 \times \text{(Volume of Carbon Fibers)}/((\text{Volume of Carbon Fibers}) + (\text{Volume of}$$

$$\text{Thermoplastic Resin)}) \qquad \text{Formula (1)}$$

In the case where a volume fraction of carbon fibers is equal to or larger than 10 Vol%, desired mechanical properties are easily obtained. Meanwhile, in the case where a volume fraction is equal to or smaller than 70 Vol%, since the amount of thermoplastic resin is sufficient and dry carbon fibers do not increase, it is preferable. A more preferred range of volume fraction of carbon fibers (Vf) in the member A is from 20 Vol% to 60 Vol%, and a further preferred range 30 Vol% to 50 Vol%.

The sizes and shapes of the member A are not particularly limited.

For example, in the case where the member A have plate shapes, the thicknesses of the member A are not particularly limited; however, in general, it is preferable that the thicknesses be in a range from 0.5 mm to 20 mm, and it is more preferable that the thicknesses be in a range from 0.5 mm to 10 mm, and it is further preferable that the thicknesses be in a range from 0.5 mm to 5 mm, and it is a still further preferable that the thickness be in a range from 1 mm to 5 mm.

[Member B]

The member B contains at least a thermoplastic resin.

The member B is similar to the member A described above.

The thermoplastic resin contained in the member A and the thermoplastic resin contained in the member B may be the same as each other or may be different from each other; however, in terms of restrictions in a thermal welding process and guarantee of joint strength according to the heat histories of resins, it is preferable that the difference between the melting point of the thermoplastic resin contained in the member A and the melting point of the thermoplastic resin contained in the member B is 50°C or less, and it is more preferable that the difference is 20°C or less.

In the present invention, it is preferable that at least one of the member A, the member B, and the joining member contain reinforcing fibers, and it is more preferable that at least one of the member A, the member B, and the joining member contain carbon fibers.

[Welding Method]

In the present invention, the joining member described above is arranged between the member A and the member B, and at least a part of the joining member is melted to join the member A and the member B, to obtain a joined body of the member A and the member B.

The method of melting the joining member is not particularly limited; however, in terms of the efficiency of energy which melts the joining member which is a joining media, the method of applying vibration energy is preferable, and the vibration welding method is more preferable, and the ultrasonic welding method is further preferable. The reason is that according to the ultrasonic welding method, since the shapes and sizes of the member A and the member B have less restrictions, and any member A and any member B can be used regardless of theirs shapes, it is possible to produce a joined body to be used in a wide variety of applications according to the present invention.

An example of the case of performing the method for producing a joined body according to the present invention using the ultrasonic welding method will be described with reference to Fig. 3.

As shown in FIG. 3, the member A (A of Fig. 3) and the member B (B of Fig. 3) are arranged such that their surfaces face each other at parts to be joined, and between the member A and the member B, a joining member (1 of Fig. 3) is arranged, and to the joining surfaces thereof, an ultrasonic wave is applied from the member A side, so as to melt thermoplastic resins, thereby the member A and the member B are fixed, and the joining finishes. In this case, after the thermoplastic resins are melted by applying the ultrasonic wave, it is possible to suitably perform a cooling process, and when the joining member is arranged between the member A and the member B, it is possible to temporarily fix the joining member by well-known means (for example, direct welding).

In Fig. 3, the ultrasonic wave is applied from the member A side. However, the ultrasonic wave may be applied from the member B side.

The ultrasonic welding method is a method of applying high-frequency mechanical vibration from a resonator called a welding horn (4 of Fig. 3) while pressing the resonator against the member A or the member B, such that the mechanical vibration transferred to the member A and the member B is converted into frictional heat to melt at least a part of the joining member, thereby welding the member A and the member B, and can be performed using, for example, an ultrasonic welder (product name: "2000Xdt", produced by Branson Co., Ltd.).

Here, control factors for performing welding by applying an ultrasonic wave include the frequency of the ultrasonic wave, the amplitude of the ultrasonic wave, the application time of the ultrasonic wave, sample pressing pressure, and so on. Joint strength tends to increase as the amplitude of the ultrasonic wave, the application time, and the sample pressing pressure increase; however, in view of a device to be used, the thickness of a sheet part and the shape and size of protrusion parts in a joining member, a desired cycle time, and so on, the factors can be suitably controlled such that stable welding can be achieved.

Control conditions in ultrasonic welding include frequency, welding time, amplitude, pressing force, and so on, and preferred conditions may be conditions in which the frequency may be in a range from 15 kHz to 50 kHz, and the welding time may be in a range from 0.1 seconds to 5 seconds, and the amplitude may be in a range from 30 μm to 100 μm, and the pressing force may be in a range from 500 N to 2000 N. In terms of productivity in welding, it is more preferable that the frequency be in a range from 20 kHz to 40 kHz, and the pressing force be in a range from 0.5 seconds to 2 seconds, and the welding pressure be in a range from 500 N to 1500 N.

Also, in ultrasonic welding, to fix the positions of joining object bodies to fix the welding position, jigs called anvils may be used.

[Joined Body]

In a joined body which can be produced according to the present invention, the ratio of the distance between joining surfaces of the member A and the member B in the joined body to the height of a joining member before joining, which is defined by the following formula (S2), is 95% or less, and it is more preferable that the above-mentioned ratio is 80% or less. If the above-mentioned ratio is 95% or less, sufficient welding is performed, and the joined body is excellent in joint strength.

Here, the "height of the joining member before joining" means the sum of the height of the protrusion part and the height (thickness) of the sheet part in the joining member. For example, in the joining member 1 shown in FIG. 4, the height of the joining member is the sum of the maximum height h of the protrusion parts 3 and the thickness t of the sheet part 2.

Formula (S2):

(Ratio of Distance between Joining Surfaces of Member A and Member B in Joined Body to Height of Joining Member before Joining) = [(Distance between Joining Surfaces of Member A and Member B in Joined Body)/(Height of Joining Member before Joining)] × 100 (%)

Examples

Hereinafter, the present invention will be described in more detail by giving production examples, examples, reference examples, and comparative examples; however, the present invention is not limited to them.

Individual values in each of the examples, the reference examples, and the comparative examples were determined according to the following methods.

(1) Average Fiber Length of Reinforcing fibers in Each Fiber-Reinforced Resin Material

The average fiber length of reinforcing fibers in each fiber-reinforced resin material was determined by heating the fiber-reinforced resin material in a furnace at 500°C for 1 hour to remove a thermoplastic resin, randomly extracting 100 reinforcing fibers, measuring the lengths of the extracted 100 reinforcing fibers to the unit of 1 mm with a caliper, and averaging the lengths. In the case where the average fiber length was shorter than 1 mm, the lengths of reinforcing fibers were measured to the unit of 0.1 mm under an optical microscope.

(2) Volume Fraction of Reinforcing fibers in Each Fiber-Reinforced Resin Material

As for the volume fraction of reinforcing fibers in each fiber-reinforced resin material, the density of the fiber-reinforced resin material was obtained by a submerged replacement method, and from the relationship between the density of only reinforcing fibers and the density of only the resin measured in advance, the volume fraction of reinforcing fibers was calculated.

(3) Tensile Shear Strength of Fiber-Reinforced Resin Joined-Body

Tensile shear strength was measured according to No. M406-87 in "The Society of Automotive Engineers of Japan" issued in March, 1987 by Society of Automotive Engineers of Japan, Inc. Specifically, determination of tensile shear strength (tensile shear bonding strength) was performed at a tension rate of 5 mm/s, and from the area of a welded part obtained by a method of the following (4), tensile shear strength per unit area (MPa) was obtained.

(4) Projected Area of Welded Part

From each obtained fiber-reinforced resin joined-body, a member A or a member B which is a joining object body was peeled. The joining surface was visually observed from the direction perpendicular to the joining surface. The longest axis in the welded area was measured as a long side, and an axis perpendicular to the longest axis of the welded area was measured as a short side, to the unit of 0.1 mm according to rules. Thereafter the welded area was calculated as an area enclosed by an ellipse having the long side and the short side.

(Production Examples of Member A and Member B)

Hereinafter, production examples of the member A and member B which are joining object bodies will be described.

(Production Example 1)

In Production Example 1, a production example of joining object bodies with integrated protrusions to function as energy directors will be described.
As reinforcing fibers, fibers having an average fiber length of 30 mm obtained by cutting STS40-24KS (having an average fiber diameter of 7 $\mu$m and a density of about 1750 kg/m$^3$) of PAN-based carbon fibers "Tenax" (registered trademark) produced by Toho Tenax Co., Ltd. were used, and as a thermoplastic resin, nylon 6 resin A1030 (having a density of about 1130 kg/m$^3$) produced by Unitika Ltd. was used. Carbon fibers and nylon 6 resin were mixed such that the volume fraction of carbon fibers in the total volume of carbon fibers and nylon 6 resin becomes 35%, and the mixture was compressed under a pressure of 2.0 MPa while being heated by a press machine heated to 280°C, for 5 minutes, thereby a fiber-reinforced resin material containing carbon fibers oriented two-dimensionally and randomly in the in-plane direction was prepared.
The molded plate obtained was cut to a size of 390 mm × 300 mm, and was dried in a hot air drier for 4 hours, and then the molded plate was heated to 280°C by an infrared heater. The heated molded plate was introduced into a mold in which concaves were carved so as to form protrusions as energy directors. The temperature of the mold was set to 140°C, and the mold was pressed with a pressure of 5 MPa, thereby a plate-like shaped product having a size 400 mm × 400 mm × 2.5 mm was obtained. This shaped product was cut into rectangular pieces having a size of 100 mm × 25 mm. An end part of each rectangular shaped product in the longitudinal direction, i.e. a part predetermined as a joining surface had protrusions as energy directors, and the area thereof was 25 mm × 25 mm. The protrusions serving as energy directors had spherical cap shapes and the maximum height of 0.2 mm, and the ratio of the projected areas of the protrusions to the area of the joining surface was 60%.
In this way, members I were prepared as joining object bodies. The results are shown in Table 1.
Also, on the other end part of a rectangular shaped product having the size of 100 m × 25 mm, a rectangular tab having a size of 38 mm × 25 mm was attached with an adhesive (PLEXUS MA530), and on each member I, a tensile lap-shear strength test was conducted.

(Production Example 2)

Members II were produced as joining object bodies in the same way as that in Production Example 1 except that protrusions to function as energy directors were not formed during press molding. The results are shown in Table 1.

(Production Example 3)

Members III were produced as joining object bodies in the same way as that in Production Example 2 except that carbon fibers having an average fiber length of 20 mm were used. The results are shown in Table 1.

(Production Example 4)

Members IV were produced as joining object bodies in the same way as that in Production Example 2 except that carbon fibers were mixed so as to have a volume fraction of 45% with respect to the total volume of carbon fibers and nylon 6 resin. The results are shown in Table 1.

(Production Example 5)

100 parts by weight of fibers obtained by cutting STS40-24KS of carbon fibers "Tenax" (registered as a trade mark) produced by Toho Tenax Co., Ltd. and having an average fiber length 10 mm and 320 parts by weight of nylon 6 resin A1030 produced by Unitika Ltd. were put as carbon fibers and a thermoplastic resin into a twin-screw kneading extruder, and were kneaded, whereby a fiber-reinforced resin composition was prepared. Of this resin composition, the carbon fibers were in the form of single fibers, and the volume fraction of the carbon fibers was 17%. The obtained fiber-reinforced resin composition was introduced into a mold of 120 mm × 120 mm, and a shaped product having 120 mm × 120 mm × 2.5 mm was produced by a 110-ton electric injection molding machine produced by The Japan Steel Works, LTD. (JSW180H produced by The Japan Steel Works, LTD.). This shaped product was cut into rectangular pieces having a size of 100 mm × 25 mm, whereby members V were prepared as joining object bodies. The results are shown in Table 1. Also, on the other end part of a member V in the longitudinal direction, a rectangular tab having a size of 38 mm × 25 mm was attached with an adhesive (PLEXUS MA530), and a tensile lap-shear test was conducted. The average fiber length of carbon fibers in the members V was 0.9 mm as shown in Table 1.

(Production Example 6)

Members VI were produced as joining object bodies in the same way as that in Production Example 5 except that polycarbonate (L-1225Y produced by Teijin Ltd.) was used as a thermoplastic resin and 380 parts by weight of polycarbonate was used with respect to 100 parts by weight of carbon fibers. The results are shown in Table 1.

(Production Example 7)

Members VII were produced as joining object bodies in the same way as that in Production Example 5 except that polycarbonate (L-1225Y produced by Teijin Ltd.) was used as a thermoplastic resin and 200 parts by weight of polycarbonate was used with respect to 100 parts by weight of carbon fibers. The results are shown in Table 1.

[Table 1]

| | Production Example 1 | Production Example 2 | Production Example 3 | Production Example 4 | Production Example 5 | Production Example 6 | Production Example 7 |
|---|---|---|---|---|---|---|---|
| Member | I | II | III | IV | V | VI | VII |
| Average Fiber Length (mm) | 30 | 30 | 20 | 30 | 0.9 | 0.9 | 0.9 |
| Volume Fraction of Carbon Fibers (Vf) | 35 | 35 | 35 | 45 | 17 | 25 | 15 |
| Thermoplastic Resin | Nylon 6 | Nylon 6 | Nylon 6 | Nylon 6 | Nylon 6 | PC | PC |
| Member Producing Method | Press Molding | Press Molding | Press Molding | Press Molding | Injection Molding | Injection Molding | Injection Molding |
| Energy Directors | Exist | None | None | None | None | None | None |

※ PC is the abbreviation for polycarbonate.

14

(Production Examples of Joining member)

Hereinafter, production examples of the joining member will be described.

(Production Examples 8-1 to 8-8)

Nylon 6 resin A1030 produced by Unitika Ltd. was put into a twin-screw kneading extruder, and was extruded out from a T-die, whereby sheets having a width of 400 mm and a thickness of 0.1 mm were obtained. A plurality of sheets obtained was stacked according to the thickness of the sheet part of the joining member, and was disposed in each of molds prepared so as to have cavities for forming protrusions as energy directors, and after mold clamping, the molds were held at a mold temperature of 280°C under a pressure of 0.5 MPa for 20 minutes, and were cooled to 100°C or less, whereby the joining member having sheet parts having a size of 400 mm × 400 mm and protrusion parts formed on the sheet parts integrally with the sheet parts were obtained.

The clearances between the upper parts and lower parts of molds to be used and the sizes and distributions of cavities in the molds were suitably adjusted to obtain shapes and heights (maximum heights) of protrusion parts, the thicknesses of sheet parts, protrusion part formation surfaces (one surface or both surfaces), the ratios of the sums of the projected areas of protrusion parts to the areas of the sheet parts (the ratios of the projected areas of protrusion parts) disclosed in Table 2. In this way, joining members VIII-1 to VIII-8 were produced.

(Production Example 9)

Joining member IX were produced in the same way as that in Production Example 8-2 except that sheets having a width of 400 mm and a thickness of 0.1 mm, obtained by putting 100 parts by weight of fibers obtained by cutting STS40-24KS of carbon fibers "Tenax" (registered as a trade mark) produced by Toho Tenax Co., Ltd. and having an average fiber length of 10 mm and 355 parts by weight of nylon 6 resin A1030 produced by Unitika Ltd., as carbon fibers and a thermoplastic resin, into a twin-screw kneading extruder, and extruding the mixture from a T-die, were used. The results are shown in Table 2.

(Production Example 10)

Joining member X were produced in the same way as that in Production Example 8-2 except that polycarbonate (L-1225Y produced by Teijin Ltd.) was used as a thermoplastic resin. The results are shown in Table 2.

[Table 2]

| | Production Example 8-1 | Production Example 8-2 | Production Example 8-3 | Production Example 8-4 | Production Example 8-5 | Production Example 8-6 | Production Example 8-7 | Production Example 8-8 | Production Example 9 | Production Example 10 |
|---|---|---|---|---|---|---|---|---|---|---|
| Joining Member | VIII-1 | VIII-2 | VIII-3 | VIII-4 | VIII-5 | VIII-6 | VIII-7 | VIII-8 | IX | X |
| Fiber Length (mm) | - | - | - | - | - | - | - | - | 1 mm or less | - |
| Volume Fraction of Carbon Fibers (Vf) | 0 | 0 | 0 | 0 | 0 | 0 | 0 | 0 | 15 | 0 |
| Thermoplastic Resin | Nylon 6 | Nylon 6 | Nylon 6 | Nylon 6 | Nylon 6 | Nylon 6 | Nylon 6 | Nylon 6 | Nylon 6 | PC |
| Shaped Product Producing Method | Press Molding | Press Molding | Press Molding | Press Molding | Press Molding | Press Molding | Press Molding | Press Molding | Press Molding | Press Molding |
| Energy Directors  Shape | Spherical Cap | Spherical Cap | Spherical Cap | Spherical Cap | Spherical Cap | Spherical Cap | Spherical Cap | Linear Shape Having Regular Triangle Cross Section | Spherical Cap | Spherical Cap |
| Single or Both Protrusion Forming Surfaces | Single Surface | Single Surface | Single Surface | Single Surface | Both Surfaces | Both Surfaces | Both Surfaces | Single Surface | Single Surface | Single Surface |
| Sheet Thickness (mm) | 0.1 | 0.1 | 0.1 | 0.3 | 0.3 | 1 | 3 | 0.1 | 0.1 | 0.1 |
| Protrusion Height (mm) | 0.1 | 0.2 | 0.2 | 0.3 | 0.2 | 0.2 | 0.2 | 0.3 | 0.2 | 0.2 |

(continued)

| | Production Example 8-1 | Production Example 8-2 | Production Example 8-3 | Production Example 8-4 | Production Example 8-5 | Production Example 8-6 | Production Example 8-7 | Production Example 8-8 | Production Example 9 | Production Example 10 |
|---|---|---|---|---|---|---|---|---|---|---|
| Ratio of Projected Areas Of Protrusions (%) | 60 | 60 | 30 | 60 | 60 | 60 | 60 | 60 | 60 | 60 |

(Examples 1 to 9)

As the member A and the member B, members II were used, and each of the joining members VIII-1 to VIII-8 and IX was arranged between parts of a member A and a member B predetermined as joining surfaces and facing each other as shown in FIG. 3, and using an ultrasonic welder (a welder "2000Xdt" produced by Branson Ultrasonics Co., Ltd.), an ultrasonic wave was applied to a part of the stack corresponding to the part of the joining member having energy directors (protrusion parts) from the side where there was the member A by a horn having a diameter of 18 mm, whereby a joined body (fiber-reinforced specimens for tensile-shear welding tests) was obtained. As welding conditions, a frequency of 20 kHz, an amplitude of 60 $\mu$m, a welding force of 1000 N, a trigger force of 250 N, and a cooling time of 2 seconds were set, and in the cases of using one of the joining members VIII-1 to VIII-5, VIII-8, and IX, an ultrasonic wave application time of 1 second was set, and in the cases of using one of joining members VIII-6 and VIII-7, an ultrasonic wave application time of 2 seconds was set.

The tensile shear strength (joint strength) of each of the prepared joined body was determined by the determination method of the tensile-shear test described in (3). The results are shown in Table 3.

Also, in Table 3, "Ratio of Distances between Joining Surfaces before and after Joining", "Minimum Distance between Joining Surfaces during Welding", and "Height of Joining Member before Joining" are also disclosed. "Minimum Distance between Joining Surfaces during Welding" will be described below.

A ratio of distances between joining surfaces before and after joining was calculated by [(Distance between Joining Surfaces after Joining)/(Distance between Joining Surfaces before Joining)] $\times$ 100 (%), and in each of Examples 1 to 13, since the distance between the joining surfaces after joining was the same as the distance between the joining surfaces of the member A and the member B in the joined body, and the distance between the joining surfaces before joining was the same as the height of the joining member before joining, the ratio of the distances between the joining surfaces before and after joining was the same as the value of the formula (S2).

Also, the value of the formula (S2) is "Ratio of Distance between Joining Surfaces of Member A and Member B in Joined Body to Height of Joining Member Before Joining" of the above-mentioned formula (S2).

(Examples 10 to 13)

Joined body (fiber-reinforced specimens for tensile-shear welding tests) were prepared in the same ways as those in Example 1, Example 4, Example 6, and Example 7, respectively, except that the vicinities of joining surfaces of the member A and the member B were fixed by jigs to secure predetermined (minimum) clearances between joining surfaces of the member A and the member B in the joined body, shown in the items "Minimum Distance between Joining Surfaces during Welding".

Also, the tensile shear strength (joint strength) of each of the prepared joined body was determined in the same determination method as that in Examples 1 to 9. The results are shown in Table 3.

Also, a minimum distance between joining surfaces during welding is a value limiting the distance between a member A and a member B during welding, and is a lower limit of the distance between joining surfaces of a member A and a member B during welding. The distance between a member A and a member B can be freely changed as long as it is equal to or larger than a minimum distance between joining surfaces thereof during welding.

In Table 3, the item "Minimum Distance between Joining Surfaces during Welding" of each of Examples 1 to 9 is "Non-existence", and this indicates that there is no lower limit to the distance between the member A and the member B during welding (there is no lower limit set).

In the related art, in general, joining surfaces of members to be joined are brought into contact with each other; however, in some cases such as the case where any member is warped, a gap between the joining surfaces is formed. In such cases, if there is a gap which cannot be solved by applying pressure during welding, welding is impossible and a joined body cannot be obtained. In Comparative Examples 1 to 3 to be described below, such situations were simulated, and since the joining member of the present invention were not used, joined body having sufficient joint strength were not obtained.

In contrast, in the present invention, even though there is a gap between a member A and a member B, since it is possible to fill the gap by interposing a joining member between the members, a joined body excellent in joint strength can be obtained, and in Examples 10 to 13, such situations were simulated. In Examples 10 to 13, even when predetermined values were set as minimum distances between joining surfaces during welding, joined body excellent in joint strength were obtained by using the joining member having suitable thicknesses.

(Comparative Example 1)

A member I and a member II were used as a member A and a member B, respectively, and the member A and the member B were arranged so as to face each other at parts predetermined as joining surfaces, and using an ultrasonic welder (a welder "2000Xdt" produced by Branson Ultrasonics Co., Ltd.), an ultrasonic wave was applied to a part of the stack corresponding to the part of the member A having energy directors from the side where there was the member A by a horn having a diameter of 18 mm, whereby a joined body (a fiber-reinforced piece for a tensile-shear welding test) was obtained. As welding conditions, a frequency of 20 kHz, an amplitude of 60 $\mu$m, a welding force of 500 N, a trigger force of 250 N, a vibration application time of 1 second, and a cooling time of 2 seconds were set.

The tensile shear strength (joint strength) of the prepared joined body was determined by the determination method of the tensile-shear test described in (3). The results are shown in Table 3.

(Comparative Examples 1 to 3)

Welding was performed in the same way as that in Reference Example 1 except that the vicinities of joining surfaces of the member A and the member B were fixed with jigs to set minimum intervals (distances) between the joining surfaces of the member A and the member B to 0.3 mm, 0.9 mm, and 2.8 mm, respectively. As a result, joined body suitable for tensile-shear tests could not be obtained, and thus "0" were recorded as corresponding joint strength. The results are shown in Table 3.

[Table 3]

| | Example 1 | Example 2 | Example 3 | Example 4 | Example 5 | Example 6 | Example 7 | Example 8 | Example 9 |
|---|---|---|---|---|---|---|---|---|---|
| Member A | II | II | II | II | II | II | II | II | II |
| Member B | II | II | II | II | II | II | II | II | II |
| Joining Member | VIII-1 | VIII-2 | VIII-3 | VIII-4 | VIII-5 | VIII-6 | VIII-7 | VIII-8 | IX |
| Ratio of Distances between Joining Surfaces before and after Joining (%) (Value (%) Of Formula (S2)) | 28 | 22 | 14 | 38 | 39 | 66 | 80 | 20 | 18 |
| Minimum Distance between Joining Surfaces During Welding (mm) | None | None | None | None | None | None | None | None | None |
| Height of Joining Member Before Joining (mm) | 0.2 | 0.3 | 0.3 | 0.6 | 0.5 | 1.2 | 3.2 | 0.4 | 0.3 |
| Tensile Shear Strength (MPa) | 35 | 34 | 31 | 33 | 33 | 33 | 32 | 33 | 34 |

[Table 3](Continued)

| | Example 10 | | | Example 11 | | Example 12 | Example 13 | | |
|---|---|---|---|---|---|---|---|---|---|
| Member A | II | | | II | | II | II | | |
| Member B | II | | | II | | II | II | | |
| Joining Member | VIII-1 | | | VIII-4 | | VIII-6 | VIII-7 | | |
| Ratio of Distances between Joining Surfaces before and after Joining (%) (Value (%) Of Formula (S2)) | 50 | | | 50 | | 75 | 88 | | |
| Minimum Distance between Joining Surfaces During Welding (mm) | 0.1 | | | 0.3 | | 0.9 | 2.8 | | |
| Height of Joining Member Before Joining (mm) | 0.2 | | | 0.6 | | 1.2 | 3.2 | | |
| Tensile Shear Strength MPa | 35 | | | 33 | | 31 | 30 | | |
| | | | | Comparative Example 1 | | Comparative Example 2 | Comparative Example 3 | Reference Example 1 | |
| Member A | | | | I | | I | I | I | |
| Member B | | | | II | | II | II | II | |
| Joining Member | | | | 0.3 | | 0.9 | 2.8 | 0.0 | |
| Tensile Shear Strength (MPa) | | | | 0 | | 0 | 0 | 35 | |

(Examples 14 to 16)

Joined body was obtained in the same way as that in Example 2 except that members III to V were used as the member B. The results are shown in Table 4.

(Example 17)

A joined body was obtained in the same way as that in Example 2 except that members VI were used as a member A and a member B and a joining member X was used between the member A and the member B. The result is shown in Table 4.

(Example 18)

A joined body was obtained in the same way as that in Example 17 except that a member VII was used as a member B. The result is shown in Table 4.

[Table 4]

|  | Example 14 | Example 15 | Example 16 | Example 17 | Example 18 |
|---|---|---|---|---|---|
| Member A | II | II | II | VI | VI |
| Member B | III | IV | V | VI | VII |
| Joining Member | VIII-2 | VIII-2 | VIII-2 | X | X |
| Tensile Shear Strength (MPa) | 34 | 32 | 34 | 34 | 33 |

Industrial Applicability

According to the present invention, it is possible to provide a method for producing a joined body, which is low in cost, and is excellent in productivity, and can join joining object bodies stably with high joint strength even in joining all parts of joining object bodies or joining warped joining object bodies, and makes it possible to easily perform a repair even though joined surfaces separate from each other locally.

Also, according to the present invention, it is possible to provide a method for producing a joined body, excellent in joint strength and the degree of freedom in design and applicable for mass production.

Although the present invention has been described in detail with reference to the specific embodiment, it is apparent to those skilled in the art that various changes and modifications can be made without departing from the scope of the present invention. As noted, the present invention is a method for producing a joined body according to claim 1. Further embodiments of the invention are described in the dependent claims.

Reference Signs List

1   Joining Member
2   Sheet Part
3   Protrusion Part
4   Welding Horn
A   Member A
B   Member B
t   Thickness of Sheet Part
h   Maximum Height of Protrusion Parts

**Claims**

1. A method for producing a joined body, the method comprising:

   disposing a joining member (1) between a member A (A) containing a thermoplastic resin and a member B (B) containing a thermoplastic resin, the joining member having a sheet part (2) containing a thermoplastic resin and a plurality of protrusion parts (3) integrally formed with the sheet part on at least one surface of the sheet part, the protrusion parts containing a thermoplastic resin; and

melting at least a part of the joining member to join the member A and the member B to obtain a joined body thereof;

wherein the maximum height (h) of the protrusion parts is in a range from 100 to 500 $\mu$m; and,

wherein the ratio of the distance between joining surfaces of the member A and the member B in the joined body to the height of the joining member before joining which is defined by the following Formula S2 is 95% or less;

Formula S2:

Ratio of Distance between Joining Surfaces of Member A and Member B in Joined Body to Height of Joining Member before Joining = [(Distance between Joining Surfaces of Member A And Member B in Joined Body)/(Height of Joining Member before Joining)] × 100 (%).

2. The method for producing a joined body according to Claim 1, wherein the thickness (t) of the sheet part is in a range from 100 $\mu$m to 5000 $\mu$m.

3. The method for producing a joined body according to Claim 1 or 2, wherein the maximum height of the protrusion parts is in a range from 100 $\mu$m to 300 $\mu$m.

4. The method for producing a joined body according to any one of Claims 1 to 3, wherein, with respect to at least one surface of the joining member, the ratio of the sum of the projected areas of the protrusion parts to the area of the sheet part which is defined by the following formula S1 is in a range from 25% to 95%;

Formula S1:

(Ratio of Sum of Projected Areas of Protrusion Parts to Area of Sheet Part) = [(Sum of Projected Areas of Protrusion Parts on One Surface of Sheet Part)/(Area of One Surface of Sheet Part)] × 100 (%).

5. The method for producing a joined body according to any one of Claims 1 to 4, wherein both surfaces of the sheet part of the joining member have the protrusion parts.

6. The method for producing a joined body according to any one of Claims 1 to 5, wherein a method of melting at least one part of the joining member is a method of applying vibration energy.

7. The method for producing a joined body according to any one of Claims 1 to 6, wherein at least one of the member A, the member B, and the joining member contains reinforcing fibers.

8. The method for producing a joined body according to any one of Claims 1 to 7, wherein a thickness of the sheet part is 300 $\mu$m or greater.

9. The method for producing a joined body according to Claim 6, wherein the protrusion parts are starting point of the melting at least one part of the joining member.

10. The method for producing a joined body according to any one of Claims 1 to 9, wherein the joining member is disposed in a gap between the member A and the member B, the gap being caused by warpages of the member A and the member B.

**Patentansprüche**

1. Verfahren zur Herstellung eines verbundenen Körpers, wobei das Verfahren umfasst:

Anordnen eines Verbindungselements (1) zwischen einem Element A (A), welches ein thermoplastisches Harz enthält, und einem Element B (B), welches ein thermoplastisches Harz enthält, wobei das Verbindungselement ein Lagenteil (2), das ein thermoplastisches Harz enthält, und eine Vielzahl von Vorsprungteilen (3) aufweist, die integral mit dem Lagenteil auf mindestens einer Oberfläche des Lagenteils gebildet sind, wobei die Vorsprungteile ein thermoplastisches Harz enthalten; und
Schmelzen von mindestens einem Teil des Verbindungselements, um das Element A und das Element B zu verbinden, um einen verbundenen Körper davon zu erhalten;
wobei die Maximalhöhe (h) der Vorsprungteile in einem Bereich von 100 bis 500 $\mu$m liegt; und
wobei das Verhältnis des Abstands zwischen den Verbindungsoberflächen des Elements A und des Elements B in dem verbundenen Körper zu der Höhe der Verbindungselemente vor dem Verbinden, das durch die folgende Formel S2 definiert ist, 95 % oder weniger beträgt;

```
Formel S2:
Verhältnis des Abstands zwischen Verbindungsoberflächen von Element A und Element B in dem verbundenen Körper zu Höhe des Verbindungselements vor
dem Verbinden = [(Abstand zwischen Verbindungs-
oberflächen von Element A und Element B in dem
verbundenen Körper)/(Höhe des Verbindungselements
vor dem Verbinden)] x 100 (%).
```

2. Verfahren zur Herstellung eines verbundenen Körpers nach Anspruch 1, wobei die Dicke (t) des Lagenteils im Bereich von 100 $\mu$m bis 5000 $\mu$m liegt.

3. Verfahren zur Herstellung eines verbundenen Körpers nach Anspruch 1 oder 2, wobei die Maximalhöhe der Vorsprungteile im Bereich von 100 $\mu$m bis 300 $\mu$m liegt.

4. Verfahren zur Herstellung eines verbundenen Körpers nach einem der Ansprüche 1 bis 3, wobei bezogen auf mindestens eine Oberfläche des Verbindungselements das Verhältnis der Summe der projizierten Flächen der Vorsprungteile zu der Fläche des Lagenteils, das durch die folgende Formel S1 definiert ist, in einem Bereich von 25 % bis 95 % liegt;

```
Formel S1:
(Verhältnis der Summe der projizierten Flächen der
Vorsprungteile zu der Fläche des Lagenteils) =
[(Summe der projizierten Flächen der Vorsprungteile auf einer Oberfläche des Lagenteils)/(Fläche
von einer Oberfläche des Lagenteils)] x 100 (%).
```

5. Verfahren zur Herstellung eines verbundenen Körpers nach einem der Ansprüche 1 bis 4, wobei beide Oberflächen des Lagenteils des Verbindungselements die Vorsprungteile aufweisen.

6. Verfahren zur Herstellung eines verbundenen Körpers nach einem der Ansprüche 1 bis 5, wobei ein Verfahren zum Schmelzen mindestens eines Teils des Verbindungselements ein Verfahren des Anwendens von Vibrationsenergie ist.

7. Verfahren zur Herstellung eines verbundenen Körpers nach einem der Ansprüche 1 bis 6, wobei mindestens eines von dem Element A, dem Element B und dem Verbindungselement Verstärkungsfasern enthält.

8. Verfahren zur Herstellung eines verbundenen Körpers nach einem der Ansprüche 1 bis 7, wobei eine Dicke des Lagerteils 300 μm oder größer ist.

9. Verfahren zur Herstellung eines verbundenen Körpers nach Anspruch 6, wobei die Vorsprungteile Ausgangspunkt des Schmelzens an mindestens einem Teil des Verbindungselements sind.

10. Verfahren zur Herstellung eines verbundenen Körpers nach einem der Ansprüche 1 bis 9, wobei das Verbindungselement in einer Lücke zwischen dem Element A und dem Element B angeordnet ist, wobei die Lücke durch Verwerfungen des Elements A und des Elements B verursacht wird.

**Revendications**

1. Procédé de production d'un corps assemblé, le procédé comprenant :

   le placement d'un élément d'assemblage (1) entre un élément A (A) contenant une résine thermoplastique et un élément B (B) contenant une résine thermoplastique, l'élément d'assemblage possédant une partie feuille (2) contenant une résine thermoplastique et une pluralité de parties protubérantes (3) formées d'une seule pièce avec la partie feuille sur au moins une surface de la partie feuille, les parties protubérantes contenant une résine thermoplastique ; et
   la fusion d'au moins une partie de l'élément d'assemblage pour assembler l'élément A et l'élément B afin d'obtenir un corps assemblé de ceux-ci ;
   dans lequel la hauteur maximum (h) des parties protubérantes est dans une plage de 100 à 500 μm ; et,
   dans lequel le rapport de la distance entre des surfaces d'assemblage de l'élément A et de l'élément B dans le corps assemblé à la hauteur de l'élément d'assemblage avant l'assemblage qui est défini par la formule S2 suivante est inférieur ou égal à 95 % ;

   ```
   Formule S2 :
   rapport   de   la   distance   entre   des   surfaces
   d'assemblage  d'un  élément  A  et  d'un  élément  B  dans  un
   corps  assemblé  à  la  hauteur  de  l'élément  d'assemblage
   avant  l'assemblage  =  [(distance  entre  des  surfaces
   d'assemblage  de  l'élément  A  et  de  l'élément  B  dans  un
   corps  assemblé)/(hauteur  de  l'élément  d'assemblage  avant
   assemblage)]  x  100  (%).
   ```

2. Procédé de production d'un corps assemblé selon la revendication 1, dans lequel l'épaisseur (t) de la partie feuille est dans une plage de 100 μm à 5 000 μm.

3. Procédé de production d'un corps assemblé selon la revendication 1 ou 2, dans lequel la hauteur maximum des parties protubérantes est dans une plage de 100 μm à 300 μm.

4. Procédé de production d'un corps assemblé selon l'une quelconque des revendications 1 à 3, dans lequel, par rapport à au moins une surface de l'élément d'assemblage, le rapport de la somme des superficies en saillie des parties protubérantes à la superficie de la partie feuille qui est défini par la formule S1 suivante est dans une plage de 25 % à 95 % ;

```
Formule S1 :
(rapport de la somme des superficies en saillie des
parties protubérantes à la superficie de la partie
feuille) = [(somme des superficies en saillie des parties
protubérantes sur une surface de la partie
feuille)/(superficie d'une surface de la partie feuille)]
x 100 (%).
```

**5.** Procédé de production d'un corps assemblé selon l'une quelconque des revendications 1 à 4, dans lequel les deux surfaces de la partie feuille de l'élément d'assemblage possèdent les parties protubérantes.

**6.** Procédé de production d'un corps assemblé selon l'une quelconque des revendications 1 à 5, dans lequel un procédé de fusion d'au moins une partie de l'élément d'assemblage est un procédé d'application d'une énergie de vibration.

**7.** Procédé de production d'un corps assemblé selon l'une quelconque des revendications 1 à 6, dans lequel l'élément A et/ou l'élément B et/ou l'élément d'assemblage contiennent des fibres de renforcement.

**8.** Procédé de production d'un corps assemblé selon l'une quelconque des revendications 1 à 7, dans lequel une épaisseur de la partie feuille est supérieure ou égale à 300 $\mu$m.

**9.** Procédé de production d'un corps assemblé selon la revendication 6, dans lequel les parties protubérantes sont un point de départ de la fusion d'au moins une partie de l'élément d'assemblage.

**10.** Procédé de production d'un corps assemblé selon l'une quelconque des revendications 1 à 9, dans lequel l'élément d'assemblage est disposé dans un espace entre l'élément A et l'élément B, l'espace étant causé par des gauchissements de l'élément A et de l'élément B.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015163218 A
- JP 5787150 B
- US 2015041070 A1

- WO 2012105080 A
- JP 2013049208 A

**Non-patent literature cited in the description**

- **KAZUHO TAKEUCHI ; AKIO OHTANI.** EFFECT OF WELDING CONDITION OF ULTRASONIC WELDING ON JOINT PROPERTIES OF C-FRTP. *14TH JAPAN INTERNATIONAL SAMPE SYMPOSIUM AND EXHIBITION, Conference at Kanazawa,* 08 December 2015

- Process and performance evaluation of ultrasonic, induction and resistance welding of advanced thermoplastic composites. **FERNANDEZ VILLEGAS I et al.** JOURNAL OF THERMOPLASTIC COMPOSITE MATERIALS. SAGE PUBLICATIONS, 01 September 2013, vol. 26, 1007-1024